# EUROPEAN PATENT SPECIFICATION

(11) **EP 4 169 723 B1**
(45) Date of publication and mention of the grant of the patent: **23.04.2025**
(21) Application number: 21832471.3
(22) Date of filing: 27.08.2021
(51) Int. Cl.: B41J 2/175, G06F 21/60

(54) **CONSUMABLE CHIP AND CONSUMABLE CHIP RESPONSE METHOD, CONSUMABLE CARTRIDGE, AND STORAGE MEDIUM**
VERBRAUCHSCHIP UND ANTWORTVERFAHREN FÜR VERBRAUCHSCHIP, VERBRAUCHSKARTUSCHE UND SPEICHERMEDIUM
PUCE CONSOMMABLE ET PROCÉDÉ DE RÉPONSE DE PUCE CONSOMMABLE, CARTOUCHE CONSOMMABLE ET SUPPORT DE STOCKAGE

(30) Priority: 30.06.2020 CN 202010615229
(43) Date of publication of application: 26.04.2023
(73) Proprietor: Geehy Microelectronics Inc., Zhuhai, Guangdong 519060 (CN)
(72) Inventor: LIU, Weichen, Zhuhai Guangdong 519060 (CN)
(74) Representative: Sun, Yiming
(86) International application number: PCT/CN2021/115131
(87) International publication number: WO 2022/002283

(56) References cited:
- EP-A1- 3 564 037
- CN-A- 105 164 666
- CN-A- 105 431 836
- CN-A- 109 614 060
- CN-A- 111 703 210
- JP-A- H04 275 156
- JP-A- H08 310 007
- JP-A- H10 126 611
- US-A- 6 019 461
- US-A1- 2018 357 168
- US-B2- 10 205 596
- US-B2- 9 852 282

## Description

### CROSS-REFERENCE TO RELATED APPLICATIONS

This application claims priority to Chinese Patent Application No. 202010615229.1, filed with the China National Intellectual Property Administration on June 30, 2020 and entitled "CONSUMABLE CHIP AND RESPONDING METHOD FOR CONSUMABLE CHIP".

### TECHNICAL FIELD

Embodiments of this application relate to the field of office consumables, and in particular, to a consumable chip, a responding method for a consumable chip, a consumable cartridge, and a storage medium. EP-A-3564037 discloses a print cartridge memory of a print cartridge for a printer containing an identifier unique to the print cartridge, and a header or a classification field that identifies a classification of the print cartridge. The cartridge contains a mechanism that communicates the classification of the print cartridge to the printer. In response to being inserted into the appropriate receptacle in the printer, the printer and the print cartridge are positioned to communicate with one another. In response to being able to communicate, an authentication session between the printer and the print cartridge is initiated where the printer executes an authentication protocol to authenticate the digital signature, the identifier, the hardware, other components or code of the printer cartridge. The print cartridge requests authentication to initiate the authentication session.

### BACKGROUND

The present invention is defined by claims 1 to 10.

It should be understood that content described in the summary part of the present invention is not intended to limit a key or important feature of the embodiments of this application, nor is it intended to limit the scope of this application. Other features of this application are easily understood by using the following descriptions.

### BRIEF DESCRIPTION OF THE DRAWINGS

To describe the technical solutions in the embodiments of this application or in the prior art more clearly, the following briefly introduces the accompanying drawings required for describing the embodiments or the prior art. Apparently, the accompanying drawings in the following description show some embodiments of this application, and a person of ordinary skill in the art may still derive other drawings from these accompanying drawings without creative efforts.
FIG. 1 is a schematic flowchart of a responding method for a consumable chip according to an embodiment of this application;
FIG. 2 is a schematic diagram of data stored in a consumable chip in the prior art;
FIG. 3 is a schematic diagram of data stored in a consumable chip according to an embodiment of this application;
FIG. 4 is a schematic flowchart of another responding method for a consumable chip according to an embodiment of this application;
FIG. 5 is a schematic diagram of data stored in another consumable chip according to an embodiment of this application;
FIG. 6 is a schematic diagram of data stored in still another consumable chip according to an embodiment of this application;
FIG. 7 is a schematic structural diagram of a consumable chip according to an embodiment of this application; and
FIG. 8 is a schematic structural diagram of another consumable chip according to an embodiment of this application.

### DETAILED DESCRIPTION

The following clearly and completely describes the technical solutions in the embodiments of this application with reference to the accompanying drawings in the embodiments of this application. Apparently, the described embodiments are merely some but not all of the embodiments of this application. The components of the embodiments of this application, which are generally described and illustrated in the accompanying drawings herein, may be arranged and designed in various configurations. Therefore, the following detailed description of the embodiments of this application provided in the accompanying drawings is not intended to limit the scope of this application, but merely represents the selected embodiments of this application. All other embodiments obtained by a person of ordinary skill in the art based on the embodiments of this application without creative efforts shall fall within the protection scope of this application.

It should be noted that similar reference numerals and letters denote similar items in the following accompanying drawings, and therefore, once a particular item is defined in one of the accompanying drawings, no further definition or interpretation is required in the subsequent accompanying drawings.

The following specifically describes the embodiments of this application with reference to the accompanying drawings.

### Embodiment 1

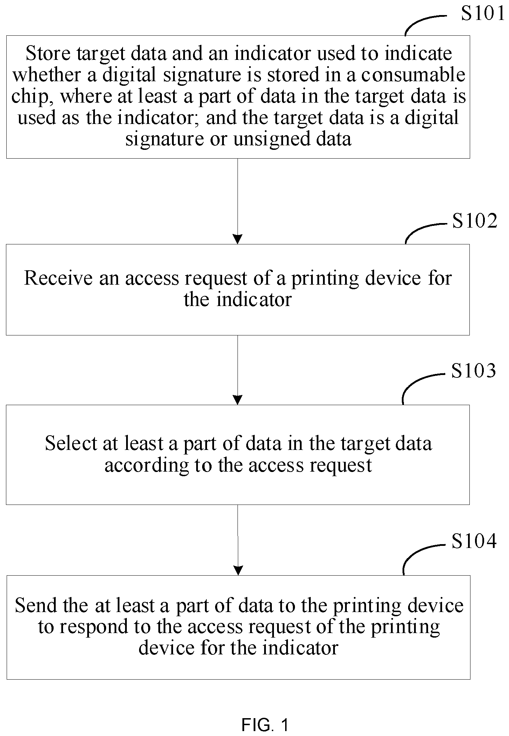

FIG. 1 is a schematic flowchart of a responding method for a consumable chip according to an embodiment of this application. As shown in FIG. 1, an execution body of this embodiment of this application is a consumable chip, which may be specifically a responding apparatus for a consumable chip. The responding apparatus for a consumable chip may be integrated into the consumable chip. The consumable chip stores target data and an indicator (indicator) that is used to indicate a type of target data in the consumable chip. At least a part of data in the target data is used as the indicator. The target data is a digital signature or unsigned data; The responding method for a consumable chip provided in this embodiment includes the following several steps.

Step 101: Store target data and an indicator used to indicate a type of the target data in the consumable chip, where at least a part of data in the target data is used as the indicator; and the target data is a digital signature or unsigned data. In this embodiment, the consumable chip may store the digital signature or the unsigned data in a memory.

The definition and generation method of the digital signature are disclosed in U.S. Patent US5231668, and details are not described herein again.

In this embodiment, if the digital signature is stored in the consumable chip, in addition to the digital signature, the indicator used to indicate that the digital signature is stored in the consumable chip, that is, the indicator indicating that the type of the target data is a digital signature is stored, and at least a part of data in the digital signature is used as the indicator indicating that a digital signature is stored. If the consumable chip stores the unsigned data, in addition to the unsigned data, an indicator indicating that the consumable chip does not store the digital signature is stored, that is, an indicator indicating that the type of the target data is the unsigned data is stored, and at least a part of the unsigned data is used as an indicator indicating that the digital signature is not stored. It can be learned that the indicator used to indicate that the digital signature is stored in the consumable chip and the indicator used to indicate that the digital signature is not stored in the consumable chip are indicators used to indicate the type of the target data, and the type of the target data includes the type of the digital signature or the type of the unsigned data.

The indicator used to indicate the type of the target data in the consumable chip may be one byte (byte) or more bytes of data, or may be one bit (bit) or more bits of data.

It may be understood that values of the indicator used to indicate that the digital signature is stored in the consumable chip and the indicator used to indicate that the digital signature is not stored in the consumable chip indicate indicators of types of different target data are different. For example, in a consumable chip that stores a digital signature, that is, when it indicates that a type of target data is a digital signature, a value of an indicator is 0x11. In a consumable chip that does not store a digital signature, that is, when it indicates that a type of target data is unsigned data, a value of an indicator is 0x22.

An example in which the target data is a digital signature, that is, a digital signature is stored is used to describe an indicator that is used to indicate that a digital signature is stored in a consumable chip and that indicates that the target data is a digital signature.

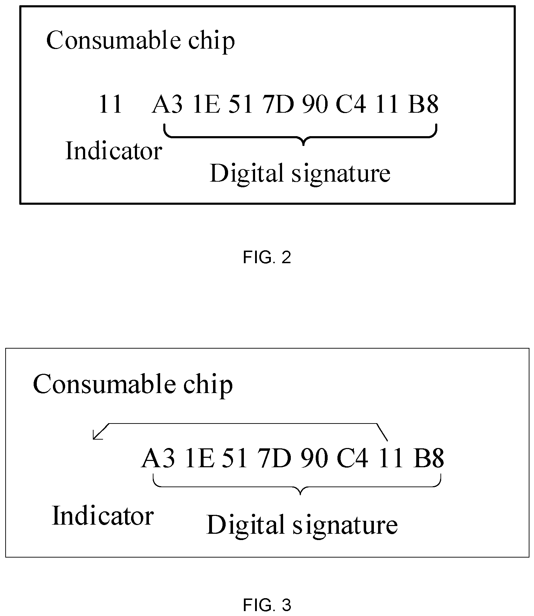

For example, FIG. 2 shows a consumable chip including a digital signature and an indicator thereof in the prior art, and the digital signature includes 8 bytes, and is denoted by a hexadecimal digit in the figure. The indicator is one byte, a value in the figure is "11", and it can be learned that the digital signature and the indicator are separately stored in different positions/addresses of the consumable chip. In this embodiment, as shown in FIG. 3, instead of separately storing data used as an indicator, when a printing device requests to access the indicator, the consumable chip selects, from the digital signature, a value "11" that may indicate that the consumable chip stores a digital signature, for example, a seventh byte of the digital signature in FIG. 3, and send the value to the printing device as a response to the access request.

Step 102: Receive an access request of a printing device for the indicator.

In this embodiment, the printing device communicates with the consumable chip. A specific communication manner is not limited in this embodiment.

Specifically, in this embodiment, when the printing device needs to determine whether the consumable chip has digital signature information, if the consumable chip has the digital signature information, the printing device verifies the digital signature to determine authenticity of the consumable chip. If there is no digital signature information in the consumable chip, that is, the consumable chip stores unsigned data, the printing device does not verify the digital signature. Therefore, the printing device sends the access request for the indicator to the consumable chip, and the consumable chip receives the access request for the indicator.

The printing device may send an access request for a specific address (for example, an address for storing the indicator) to the consumable chip, or may send an access request for continuously accessing multiple addresses, where the multiple addresses may include the address of the indicator. Therefore, the access request sent by the printing device does not necessarily directly indicate that the indicator needs to be accessed. The consumable chip may return the value of the indicator when receiving another access request of the printing device.

Step 103: Select at least a part of data in the target data according to the access request.

In this embodiment, because the consumable chip pre-stores the indicator used to indicate the type of the target data in the consumable chip, at least a part of data in the target data is used as the indicator during storage, a storage manner of the indicator in the target data is determined according to the access request, and a corresponding at least a part of data in the target data is selected according to the storage manner of the indicator as the indicator.

Step 104: Send the at least a part of data to the printing device to respond to the access request of the printing device for the indicator.

Specifically, in this embodiment, the consumable chip sends at least a part of the target data to the printing device. After obtaining the part of data, the printing device may learn of the type of the target data in the consumable chip, that is, whether digital signature data is stored. Therefore, the consumable chip may select and send at least a part of data in the target data to the printing device to respond to the access request of the printing device.

Therefore, with reference to step 101 to step 104, in this embodiment, when the consumable chip stores the digital signature, a part of data in the digital signature is used as the indicator, so as to indicate that the consumable chip stores the digital signature. When the printing device sends the access request, and requires the consumable chip to send an indicator indicating whether the consumable chip includes digital signature information, the consumable chip sends a part of data in the digital signature to the printing device in response to the access request of the printing device. After obtaining the part of data, the printing device may learn that the consumable chip stores the digital signature data.

When no digital signature is stored in the consumable chip, the consumable chip stores unsigned data. When the printing device sends the access request, and requires the consumable chip to send an indicator indicating whether the consumable chip includes digital signature information, that is, an indicator indicating the type of the target data, the consumable chip responds to the access request of the printing device, and sends at least a part of data in the unsigned data to the printing device. After obtaining the part of data, the printing device learns that there is no digital signature data stored in the consumable chip, and the printing device no longer verifies the data signature.

In the responding method for a consumable chip provided in this embodiment, target data and an indicator used to indicate a type of the target data in the consumable chip are stored, where at least a part of data in the target data is used as the indicator. The target data is a digital signature or unsigned data. An access request of a printing device for the indicator is received; at least a part of data in the target data is selected according to the access request; and the at least a part of data is sent to the printing device to respond to the access request of the printing device for the indicator. Because a part of data in the digital signature or the unsigned data represents an indicator of a type of the target data in the chip, there is no need to separately set a storage part to store the indicator and fixedly store a position/address of the indicator. Therefore, when the printing device obtains the indicator of the type of the target data, it is difficult for another third party to learn of a signature status of data in the consumable chip, thereby increasing chip security.

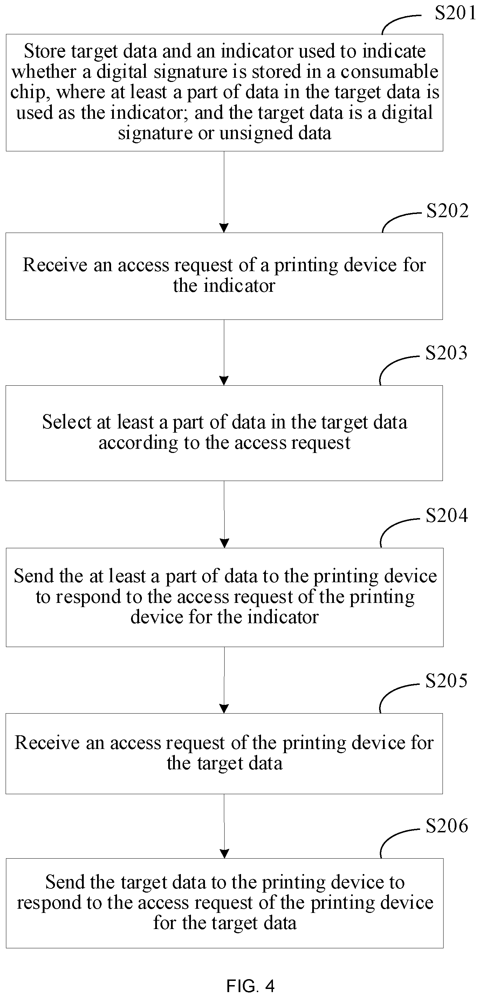

FIG. 4 is a schematic flowchart of another responding method for a consumable chip according to an embodiment of this application. As shown in FIG. 4, the responding method for a consumable chip provided in this embodiment further refines step 101 on the basis of the responding method for a consumable chip provided in Embodiment 1 of this application, and further includes a step of receiving an access request of a printing device for target data, and sending the target data to the printing device, so as to respond to the access request of the printing device for the target data. The responding method for a consumable chip provided in this embodiment includes the following steps:
Step 201: Store target data and an indicator used to indicate a type of the target data in the consumable chip, where at least a part of data in the target data is used as the indicator; and the target data is a digital signature or unsigned data.

Optionally, in this embodiment, the entire indicator used to indicate the type of the target data in the consumable chip is included in the target data.

In an optional implementation, the indicator used to indicate the type of the target data in the consumable chip is data at a fixed address in the target data. For example, the indicator may be data at an initial address (the first address) in the digital signature or the unsigned data. In this way, when the consumable chip responds to the access request of the printing device, that is, queries whether the indicator of digital signature information is included, the consumable chip may fixedly send the data at the initial address of the digital signature or the unsigned data to the printing device.

It should be noted that when the indicator used to indicate the type of the target data in the consumable chip is stored at fixed addresses in the digital signature or unsigned data of the consumable chip, the printing device may also not need to separately send an access request for the indicator used to indicate the type of the target data. The printing device may directly access these fixed addresses and read the data from these addresses. After the printing device reads the data at these addresses, data that is at specific addresses in these addresses and that is used as the indicator is preset in a control program of the printing device. Therefore, the printing device obtains the data used as the indicator at the address, and further knows whether a digital signature is stored in the consumable chip. In this way, the printing device does not send an access request for reading the indicator indicating whether the consumable chip includes digital signature information, but the printing device can also find data representing the indicator in the data. In this way, a third party cannot learn of a digital signature status of the consumable chip by collecting a communication process between the printing device and the consumable chip.

In another optional implementation, to enhance security of the consumable chip, the indicator used to indicate the type of the target data in the consumable chip may be data at multiple different addresses in the target data or common information of data at multiple different addresses.

Specifically, in this embodiment, data at multiple different addresses in the digital signature or the unsigned data may be separately used as an indicator, and data at these different addresses may have some common information. Therefore, the indicator used to indicate the type of the target data in the consumable chip may be common information of data at multiple different addresses. For example, the highest bits of the data at the different addresses in the digital signature are 1, and the highest bits of the data at the different addresses in the unsigned data are 0. It is assumed that when the indicator is "1", it indicates that the digital signature exists, and when the indicator is "0", it indicates that the digital signature does not exist. Therefore, the highest bit may be obtained from any address and used as the indicator. When responding to the printing device's request about whether digital signature information is included, the consumable chip randomly selects an address from multiple addresses in the digital signature or the unsigned data, and sends data at the selected address to the printing device. After receiving the data, the printing device determines that the highest bit of the data is 1, indicating that the consumable chip stores a digital signature, and further requests digital signature data of the consumable chip. It is determined that the highest bit of the data is 0, indicating that no digital signature is stored in the consumable chip, and digital signature data of the consumable chip is not requested, or a signature/unsigned data read from the consumable chip is not to be verified.

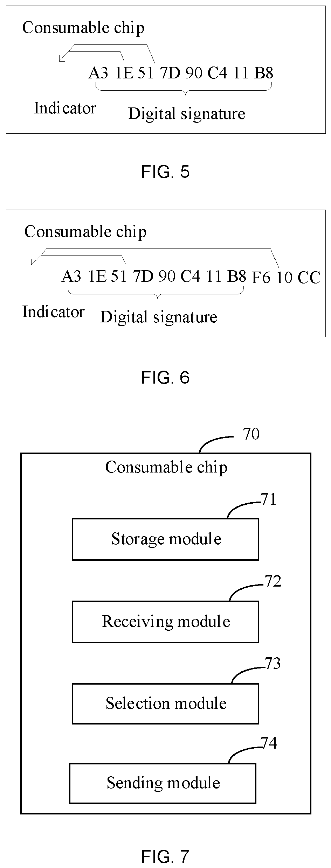

Specifically, in this embodiment, the indicator used to indicate the type of the target data in the consumable chip is a combination of data at multiple different addresses in the target data. FIG. 5 shows a case in which multiple different addresses in a digital signature are used together as an indicator. Because the highest four bits of the second byte of the digital signature in FIG. 5 are hexadecimal digits 1 and the lowest four bits of the third byte are hexadecimal digits 1, the consumable chip may combine data from these two different bytes together to form a value "11" to respond to an access request of the printing device.

In still another optional implementation, in this embodiment, to further enhance security of the consumable chip, the indicator used to indicate the type of the target data in the consumable chip is data selected from any address whose value is a preset value in the target data.

In this optional implementation, for a consumable chip that stores a digital signature and an indicator indicating that a digital signature is stored, the preset value is first determined, for example, the preset value is "1". Then, a value of the digital signature is determined byte by byte. As shown in FIG. 5, after the value of the digital signature is determined byte by byte or by using a randomly selected byte, the highest four bits of the second byte of the digital signature are hexadecimal digits 1, which are the preset value "1". Therefore, when it is determined that the value is equal to "1", it is determined that data at this address is selected as the indicator. Because an address at which the preset value "1" is determined is uncertain, the indicator is obtained by randomly selecting data at any address from the target data. For a consumable chip that stores unsigned data and an indicator indicating that no digital signature is stored (that is, indicates that the type of the target data is unsigned data), a suitable value may be randomly selected from the unsigned data as the indicator in a similar manner, so that a position/address of data used as the indicator does not need to be fixed. Because the value indicating the indicator may be any address in the digital signature or the unsigned data (provided that the value at the address meets a requirement of the indicator, that is, the foregoing preset value), it is difficult for a third party to determine the position of the indicator in the digital signature or the unsigned data, thereby further improving data security.

Optionally, in this embodiment, at least a part of data in the target data and data outside the target data are jointly used as the indicator of the type of the target data to respond to the access request of the printing device.

Specifically, a person skilled in the art may understand that, in addition to the digital signature and the indicator used to indicate that a digital signature is stored in the consumable chip, other data, such as a color, a remaining quantity, a page output (a maximum value of a quantity of pages that can be printed), a quantity of printed pages, a manufacturer, a production date, and a serial number, may be stored in the consumable chip. Therefore, in another embodiment, a part of data in the digital signature and other data than the digital signature are jointly used as the indicator indicating that a digital signature is stored in the consumable chip. When responding to the printing device's request whether digital signature information is included, the consumable chip sends the data outside the digital signature and a part of data in the signature to the printing device. For example, as shown in FIG. 6, the value "11" of the indicator may be formed by using the lowest-four-digit hexadecimal digits 1 of the third byte in the digital signature and the highest-four-digit hexadecimal digits 1 of data "10" other than the digital signature, and the consumable chip extracts a value from these two places and sends the value to the printing device.

Step 202: Receive an access request of a printing device for the indicator.

Step 203: Select at least a part of data in the target data according to the access request.

Step 204: Send the at least a part of data to the printing device to respond to the access request of the printing device for the indicator.

**In** this embodiment, an implementation of step 202 to step 204 is the same as an implementation of step 102 to step 104 in Embodiment 1 of this application, and details are not described herein again.

Step 205: Receive an access request of the printing device for the target data.

**If** the target data stored in the consumable chip is a digital signature, after obtaining, from the consumable chip, an indicator used to indicate that the consumable chip stores a digital signature, the printing device sends an access request for the digital signature to the consumable chip.

Similarly, if the target data stored in the consumable chip is unsigned data, after obtaining an indicator used to indicate that no digital signature is stored in the consumable chip, the printing device learns that there is no digital signature data stored in the consumable chip, the printing device no longer verifies a data signature, but can still obtain the unsigned data from the consumable chip, and the printing device sends an access request for the unsigned data to the consumable chip.

Step 206: Send the target data to the printing device to respond to the access request of the printing device for the target data.

In this embodiment, if the consumable chip obtains the digital signature from a memory of the consumable chip after receiving the access request for the digital signature, and sends the digital signature to the printing device, after receiving data signature data, the printing device verifies the data signature, and after the verification is passed, it indicates that the consumable chip is authentic and trustworthy.

Similarly, if the consumable chip obtains unsigned data from the memory of the consumable chip after receiving the access request for the unsigned data, and sends the unsigned data to the printing device, the printing device may receive the unsigned data, and perform further processing by using the unsigned data.

In the responding method for a consumable chip provided in this embodiment, at least a part of data in a digital signature or unsigned data indicates an indicator of a type of target data in a consumable chip. In this way, a storage part does not need to be separately disposed to store the indicator, thereby improving security of the consumable chip. In addition, the indicator has diversified storage manners, which makes it more difficult for a third party to learn of a digital signature status of the consumable chip, thereby further improving security of the consumable chip.

FIG. 7 is a schematic structural diagram of a consumable chip according to an embodiment of this application. As shown in FIG. 7, the consumable chip 70 provided in this embodiment includes a storage module 71.

The storage module 71 is configured to store target data and an indicator used to indicate a type of the target data in the consumable chip, where at least a part of data in the target data is used as the indicator; and the target data is a digital signature or unsigned data.

The consumable chip 70 may further include a receiving module 72, a selection module 73, and a sending module 74, where the receiving module 72 is configured to receive an access request of a printing device, for example, an access request for the indicator. The selection module 73 is configured to select at least a part of data in the target data according to the access request. The sending module 74 is configured to send the at least a part of data to the printing device in response to the access request of the printing device.

The consumable chip provided in this embodiment may perform the technical solution of the method embodiment shown in FIG. 1. Implementation principles and technical effects thereof are similar, and are not described herein again.

Optionally, the entire indicator used to indicate the type of the target data in the consumable chip is included in the target data.

In an optional implementation, the indicator used to indicate the type of the target data in the consumable chip is data at a fixed address in the target data.

Alternatively, in another implementation, the indicator used to indicate the type of the target data in the consumable chip is data at multiple different addresses in the target data or common information of data at multiple different addresses.

Alternatively, in still another optional implementation, the indicator used to indicate the type of the target data in the consumable chip is data selected from any address whose value is a preset value in the target data.

Optionally, at least a part of data in the target data and data outside the target data are jointly used as the indicator.

Optionally, in this embodiment, the receiving module 72 is further configured to receive an access request of the printing device for the target data. The sending module 74 is further configured to send the target data to the printing device to respond to the access request of the printing device for the target data.

The consumable chip provided in this embodiment may further perform the technical solution of the method embodiment shown in FIG. 4. Implementation principles and technical effects thereof are similar, and are not described herein again.

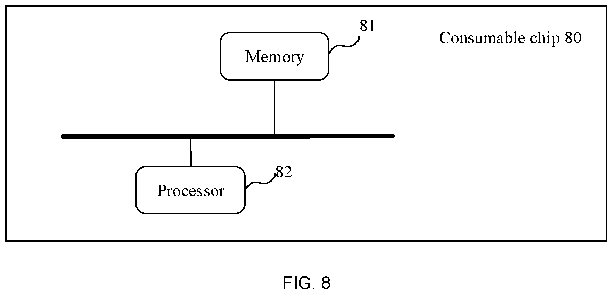

FIG. 8 is a schematic structural diagram of another consumable chip according to an embodiment of this application. As shown in FIG. 8, the consumable chip 80 in this embodiment of this application includes a memory 81, a processor 82, and a computer program.

The computer program is stored in the memory 81, and is configured to be executed by the processor 82 to implement the responding method for a consumable chip provided in this embodiment of this application.

Related description can be understood with reference to the related illustration and effects corresponding to the steps in FIG. 1 and FIG. 4, and is not made here again. In this embodiment, the memory 81 and the processor 82 are connected by using a bus.

The memory may be, but is not limited to, a random access memory (Random Access Memory, RAM), a read only memory (Read Only Memory, ROM), a programmable read-only memory (Programmable Read-Only Memory, PROM), an erasable programmable read-only memory (Erasable Programmable Read-Only Memory, EPROM), an electric erasable programmable read-only memory (Electric Erasable Programmable Read-Only Memory, EEPROM), a flash memory (Flash Memory), or the like. The memory is further configured to store a program, and after receiving an execution instruction, the processor executes the program.

The processor may be an integrated circuit chip and has a signal processing capability. The foregoing processor may be a general-purpose processor, including a central processing unit (Central Processing Unit, CPU), a network processor (Network Processor, NP), and the like. The processor may be a digital signal processor (DSP), an application-specific integrated circuit (ASIC), a field programmable gate array (FPGA) or another programmable logic device, a discrete-gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like.

A person skilled in the art should understand that the consumable chip in this application includes a memory and a processor, the memory is configured to store program instruction code, and the processor is configured to execute the program instruction code, so as to implement the data processing method applied to the consumable chip in the foregoing embodiment. An embodiment of this application may be provided as a method, an apparatus, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

An embodiment of this application further provides a consumable cartridge, where the consumable cartridge includes a consumable chip, and the consumable chip is detachably mounted on the consumable cartridge.

The consumable chip is the consumable chip shown in FIG. 7 or FIG. 8. For related description, refer to the description of the consumable chip shown in FIG. 7 or FIG. 8. Details are not described herein again.

In this embodiment, the consumable cartridge may be an ink cartridge, a powder cartridge, or a toner cartridge. Ink may be accommodated in the ink cartridge, and carbon powder may be accommodated in the powder cartridge or the toner cartridge.

An embodiment of this application further provides a computer readable storage medium, where a computer program is stored thereon, and the computer program is executed by a processor to implement the responding method for a consumable chip provided in any embodiment of this application.

An embodiment of this application further provides a chip for running an instruction, where the chip includes a memory and a processor, the memory stores code and data, the memory is coupled to the processor, and the processor runs the code in the memory, so that the chip is configured to perform any responding method for a consumable chip in the foregoing embodiments.

An embodiment of this application further provides a program product including an instruction. The program product includes a computer program. The computer program is stored in a computer readable storage medium. At least one processor may read the computer program from the computer readable storage medium. When executing the computer program, the at least one processor may implement any responding method for a consumable chip in the foregoing embodiments.

An embodiment of this application further provides a computer program, and when the computer program is executed by a processor, the computer program is configured to perform any responding method for a consumable chip in the foregoing embodiments. The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

## Claims

1. A responding method for a consumable chip (70, 80), wherein the consumable chip (70, 80) stores (S101, S201) target data, wherein the type of target data is a digital signature or unsigned data, wherein the consumable chip (70, 80) further stores an indicator used to indicate the type of the target data in the consumable chip (70, 80), wherein, when the consumable chip (70, 80) stores the digital signature, a part of data in the digital signature is used as the indicator, so as to indicate that the consumable chip (70, 80) stores the digital signature, and when no digital signature is stored in the consumable chip (70, 80), the consumable chip (70, 80) stores unsigned data,
wherein the method comprises:
receiving (S102, S202) an access request of a printing device;
selecting (S103, S203) at least a part of data in the target data according to the access request; and
sending (S104, S204) the at least a part of data to the printing device in response to the access request of the printing device.

2. The method according to claim 1, wherein the entire indicator is comprised in the target data.

3. The method according to claim 2, wherein the indicator is data of a fixed address in the target data.

4. The method according to claim 2, wherein the indicator is data of multiple different addresses in the target data or common information of data of the multiple different addresses.

5. The method according to claim 2, wherein the indicator is data selected from any address whose value is a preset value in the target data.

6. The method according to claim 1, wherein at least a part of data in the target data and data outside the target data are jointly used as the indicator of the type of the target data to respond to the access request of the printing device.

7. The method according to any one of claims 1 to 6, wherein the method further comprises:
receiving (S205) an access request of the printing device for the target data; and
sending (S206) the target data to the printing device to respond to the access request of the printing device for the target data.

8. A consumable chip (70, 80), comprising:
a storage module (71), configured to store target data and an indicator used to indicate a type of the target data in the consumable chip (70, 80), wherein the type of the target data is a digital signature or unsigned data, wherein, when the consumable chip (70, 80) is configured to store the digital signature, a part of data in the digital signature is used as the indicator, so as to indicate that the consumable chip (70, 80) stores the digital signature, and when no digital signature is stored in the consumable chip (70, 80), the consumable chip (70, 80) stores unsigned data.

9. The consumable chip (70, 80) according to claim 8, wherein the consumable chip (70, 80) further comprises:
a receiving module (72), configured to receive an access request of a printing device;
a selection module (73), configured to select at least a part of data in the target data according to the access request; and
a sending module (74), configured to send the at least a part of data to the printing device in response to the access request of the printing device.

10. A consumable cartridge, comprising the consumable chip (70, 80) according to any one of claims 8 or 9, wherein the consumable chip (70, 80) is detachably mounted on the consumable cartridge.

## Patentansprüche

1. Ein Antwortverfahren für einen Verbrauchsmaterialchip (70, 80), wobei der Verbrauchsmaterialchip (70, 80) Zieldaten speichert (S101, S201), wobei die Art der Zieldaten eine digitale Signatur oder nicht signierte Daten ist, wobei der Verbrauchsmaterialchip (70, 80) ferner einen Indikator speichert, der zur Anzeige der Art der Zieldaten im Verbrauchsmaterialchip (70, 80) dient, wobei, wenn der Verbrauchsmaterialchip (70, 80) die digitale Signatur speichert, ein Teil der Daten in der digitalen Signatur als Indikator verwendet wird, um anzuzeigen, dass der Verbrauchsmaterialchip (70, 80) die digitale Signatur speichert, und wenn keine digitale Signatur im Verbrauchsmaterialchip (70, 80) gespeichert ist, der Verbrauchsmaterialchip (70, 80) nicht signierte Daten speichert,
wobei das Verfahren Folgendes umfasst:
Empfangen (S102, S202) einer Zugriffsanforderung eines Druckgeräts;
Auswählen (S103, S203) von mindestens einem Teil der Daten in den Zieldaten gemäß der Zugriffsanforderung; und
Senden (S104, S204) des mindestens einen Teils der Daten an das Druckgerät als Antwort auf die Zugriffsanforderung des Druckgeräts.

2. Verfahren nach Anspruch 1, wobei der gesamte Indikator in den Zieldaten enthalten ist.

3. Verfahren nach Anspruch 2, wobei der Indikator Daten einer festen Adresse in den Zieldaten sind.

4. Verfahren nach Anspruch 2, wobei der Indikator Daten mehrerer unterschiedlicher Adressen in den Zieldaten oder gemeinsame Informationen von Daten der mehreren unterschiedlichen Adressen sind.

5. Verfahren nach Anspruch 2, wobei der Indikator aus beliebigen Adressen ausgewählte Daten sind, deren Wert ein voreingestellter Wert in den Zieldaten ist.

6. Verfahren nach Anspruch 1, wobei mindestens ein Teil der Daten in den Zieldaten und Daten außerhalb der Zieldaten gemeinsam als Indikator für die Art der Zieldaten verwendet werden, um auf die Zugriffsanforderung des Druckgeräts zu reagieren.

7. Verfahren nach einem der Ansprüche 1 bis 6, wobei das Verfahren ferner Folgendes umfasst:
Empfangen (S205) einer Zugriffsanforderung des Druckgeräts für die Zieldaten; und
Senden (S206) der Zieldaten an das Druckgerät, um auf die Zugriffsanforderung des Druckgeräts für die Zieldaten zu reagieren.

8. Ein Verbrauchsmaterialchip (70, 80), umfassend:
ein Speichermodul (71), das konfiguriert ist, um Zieldaten und einen Indikator zu speichern, der zur Anzeige der Art der Zieldaten im Verbrauchsmaterialchip (70, 80) dient, wobei die Art der Zieldaten eine digitale Signatur oder nicht signierte Daten ist, wobei, wenn der Verbrauchsmaterialchip (70, 80) zur Speicherung der digitalen Signatur konfiguriert ist, ein Teil der Daten in der digitalen Signatur als Indikator verwendet wird, um anzuzeigen, dass der Verbrauchsmaterialchip (70, 80) die digitale Signatur speichert, und wenn keine digitale Signatur im Verbrauchsmaterialchip (70, 80) gespeichert ist, der Verbrauchsmaterialchip (70, 80) nicht signierte Daten speichert.

9. Verbrauchsmaterialchip (70, 80) nach Anspruch 8, wobei der Verbrauchsmaterialchip (70, 80) ferner umfasst:
ein Empfangsmodul (72), das konfiguriert ist, um eine Zugriffsanforderung eines Druckgeräts zu empfangen;
ein Auswahlmodul (73), das konfiguriert ist, um mindestens einen Teil der Daten in den Zieldaten gemäß der Zugriffsanforderung auszuwählen; und
ein Sendemodul (74), das konfiguriert ist, um den mindestens einen Teil der Daten an das Druckgerät als Antwort auf die Zugriffsanforderung des Druckgeräts zu senden.

10. Eine Verbrauchsmaterialkartusche, umfassend den Verbrauchsmaterialchip (70, 80) nach einem der Ansprüche 8 oder 9, wobei der Verbrauchsmaterialchip (70, 80) abnehmbar an der Verbrauchsmaterialkartusche angebracht ist.

## Revendications

1. Un procédé de réponse pour une puce de consommable (70, 80), la puce de consommable (70, 80) stockant (S101, S201) des données cibles, le type de données cibles étant une signature numérique ou des données non signées, la puce de consommable (70, 80) stockant en outre un indicateur utilisé pour indiquer le type des données cibles dans la puce de consommable (70, 80), dans lequel, lorsque la puce de consommable (70, 80) stocke la signature numérique, une partie des données de la signature numérique est utilisée comme indicateur afin d'indiquer que la puce de consommable (70, 80) stocke la signature numérique, et lorsque aucune signature numérique n'est stockée dans la puce de consommable (70, 80), la puce de consommable (70, 80) stocke des données non signées,
le procédé comprenant :
recevoir (S102, S202) une demande d'accès d'un dispositif d'impression ;
sélectionner (S103, S203) au moins une partie des données des données cibles en fonction de la demande d'accès ; et
envoyer (S104, S204) ladite au moins une partie des données au dispositif d'impression en réponse à la demande d'accès du dispositif d'impression.

2. Procédé selon la revendication 1, dans lequel l'indicateur entier est compris dans les données cibles.

3. Procédé selon la revendication 2, dans lequel l'indicateur est une donnée d'une adresse fixe dans les données cibles.

4. Procédé selon la revendication 2, dans lequel l'indicateur est une donnée de plusieurs adresses différentes dans les données cibles ou une information commune des données des plusieurs adresses différentes.

5. Procédé selon la revendication 2, dans lequel l'indicateur est une donnée sélectionnée à partir de n'importe quelle adresse dont la valeur est une valeur prédéfinie dans les données cibles.

6. Procédé selon la revendication 1, dans lequel au moins une partie des données des données cibles et des données situées en dehors des données cibles sont conjointement utilisées comme indicateur du type des données cibles pour répondre à la demande d'accès du dispositif d'impression.

7. Procédé selon l'une quelconque des revendications 1 à 6, dans lequel le procédé comprend en outre :
recevoir (S205) une demande d'accès du dispositif d'impression pour les données cibles ; et
envoyer (S206) les données cibles au dispositif d'impression afin de répondre à la demande d'accès du dispositif d'impression pour les données cibles.

8. Une puce de consommable (70, 80), comprenant :
un module de stockage (71), configuré pour stocker des données cibles et un indicateur utilisé pour indiquer un type des données cibles dans la puce de consommable (70, 80), le type des données cibles étant une signature numérique ou des données non signées, **caractérisé en ce que**, lorsque la puce de consommable (70, 80) est configurée pour stocker la signature numérique, une partie des données de la signature numérique est utilisée comme indicateur afin d'indiquer que la puce de consommable (70, 80) stocke la signature numérique, et lorsque aucune signature numérique n'est stockée dans la puce de consommable (70, 80), la puce de consommable (70, 80) stocke des données non signées.

9. Puce de consommable (70, 80) selon la revendication 8, dans laquelle la puce de consommable (70, 80) comprend en outre :
un module de réception (72), configuré pour recevoir une demande d'accès d'un dispositif d'impression ;
un module de sélection (73), configuré pour sélectionner au moins une partie des données des données cibles en fonction de la demande d'accès ; et
un module d'envoi (74), configuré pour envoyer ladite au moins une partie des données au dispositif d'impression en réponse à la demande d'accès du dispositif d'impression.

10. Une cartouche de consommable, comprenant la puce de consommable (70, 80) selon l'une quelconque des revendications 8 ou 9, dans laquelle la puce de consommable (70, 80) est montée de manière amovible sur la cartouche de consommable.
